# EUROPEAN PATENT SPECIFICATION

(11) **EP 1 654 816 B1**
(45) Date of publication and mention of the grant of the patent: **14.11.2007**
(21) Application number: 04766395.0
(22) Date of filing: 02.08.2004
(51) Int. Cl.: H04B 10/08, G02B 6/34

(54) **WAVELENGTH-SELECTIVE OPTICAL SIGNAL PROCESSING DEVICE**
WELLENLÄNGENSELEKTIVE OPTISCHE SIGNALVERARBEITUNGSEINRICHTUNG
DISPOSITIF DE TRAITEMENT DE SIGNAUX OPTIQUES A SELECTION DE LONGUEURS D'ONDE

(30) Priority: 02.08.2003 DE 10335419
(43) Date of publication of application: 10.05.2006
(73) Proprietor: Ericsson AB, Stockholm (SE)
(72) Inventor: PEGG, Steven Ian, Southbridge, Northamptonshire NN4 8GF (GB)
(74) Representative: Collier, Ian Terry
(86) International application number: PCT/EP2004/051688
(87) International publication number: WO 2005/013516

(56) References cited:
- WO-A-99/65174
- DE-A- 19 829 227
- SHINJI MATSUOKA ED - INSTITUTE OF ELECTRICAL AND ELECTRONICS ENGINEERS: "SUPERVISORY SIGNAL TRANSMISSION METHODS FOR OPTICAL AMPLIFIER REPEATER SYSTEMS" COMMUNICATIONS : CONNECTING THE FUTURE. SAN DIEGO, DEC. 2 - 5, 1990, PROCEEDINGS OF THE GLOBAL TELECOMMUNICATIONS CONFERENCE AND EXHIBITION(GLOBECOM), NEW YORK, IEEE, US, vol. VOL. 3, 2 December 1990 (1990-12-02), pages 1846-1850, XP000218888 ISBN: 0-87942-632-2

## Description

The present invention relates to a signal processing device for selectively carrying out a processing of specific channels of a wavelength multiplex signal formed of a plurality of channels at different wavelengths.

Such a wavelength multiplex is generally formed of a large number of information channels which convey payload information, and at least one optical supervisory channel which transports information required for controlling the information channels and the information conveyed thereon in the nodes of a transmission network.

The processing of information and supervisory channels in the various devices of an information transmission system varies strongly for different reasons. E.g., in a node of such a network, it may be necessary first to evaluate the information transmitted on the supervisory channel in order to know how the individual information signals of the multiplex are to be processed at this node.

Another possible reason for different treatment of supervisory and information channels can be their different wavelengths. E.g. from US 6,411,407, an optical information transmission system with regenerating amplifiers is known, in which wavelengths outside a band of maximum gain of the regenerating amplifiers are assigned to the optical supervisory channels. When passing through a regenerating amplifier, the supervisory channels experience less gain than the information channels. If this happened several times consecutively, the optical power of the supervisory channels would decrease so much with respect to that of the information channels that the supervisory channel would cease to be operable. Therefore, processing the supervisory channel separately from the information channels is necessary in order to compensate this different gain. According to US 6,411,407, this is done by electrically terminating the supervisory channel of an incoming multiplex and reproducing the optical supervisory channel at the output of the amplifier unit. To this end, the known amplifier unit comprises a pre-amplifier for each transmission direction, which is passed through by the complete incoming signal multiplex, a so-called SCW filter which separates the optical supervisory channel from the information channels and leads it to a supervisory module for termination, a second SCW filter which receives the information channels from the first SCW filter and the newly reproduced supervisory channel from the supervisory module and combines these into an outgoing wavelength multiplex, and a post-amplifier in which the outgoing wavelength multiplex is amplified once more.

There are known documents related to adding and dropping optical channels, namely WO99/65174 and "Supervisory Signal Transmission Methods For Optical Amplifier Repeater Systems" by Shinji Matsuoka; Proceedings of the Global Telecommunications Conference and Exhibition. However operations as in the invention now to be described is neither disclosed nor suggested in the prior art document.

All components inserted on the path of the information channels through the amplifier unit require space, cause costs and cause insertion losses, which must be compensated by the amplifiers. The larger these losses are the more powerful and, hence, more expensive the amplifiers must be.

The object of the present invention is to provide a wavelength-selective optical signal processing device having an outcoupling filter for decomposing a wavelength multiplex comprising several channels at different wavelengths into a first and a second group of channels, a processing unit for carrying out a processing of the first group, and an incoupling filter for combining the processed first group and the second group into an outgoing wavelength multiplex, which is compact, simple and economic in realization.

The object is achieved by the outcoupling filter and the incoupling filter according to claim 8 and a wavelength-selective optical signal processing unit according to claim 1. By merging incoupling and outcoupling filters into this wavelength-selective structure, on the one hand, cost and space requirements are reduced because the structure assumes the tasks of both SCW filters from US 6,411,407; on the other hand, a reduction of insertion losses is achieved in the second group of channels, since these only have to pass through the single wavelength-selective structure instead of two separate filters for coupling in and out.

Preferably, the wavelength-selective reflecting structure is a Bragg grating. Such a Bragg grating may be three-, two-, or one-dimensional; an appropriate one-dimensional grating in form of two partially fused optical fibres is described in US 6,578,388 B1.

Alternatively, a dichroic mirror may be considered as a reflecting structure.

Preferably, the signal processing device of the invention is provided for a wavelength multiplex having a plurality of information channels and at least one supervisory channel, wherein the at least one supervisory channel forms the first group and the information channels form the second group.

If the signal processing device comprises an optical amplifier stage through which the complete wavelength multiplex passes, the amplifier stage and the wavelength(s) of the first group, respectively, are preferably selected such that the optical amplifier stage is transparent for the first group also in its unpumped state, so that it will be transmitted also in case of a failure of the amplifier.

Further features and embodiments of the invention become apparent from the subsequent description of exemplary embodiments thereof, referring to the appended Figures.
Fig. 1 is a plan view of a combined incoupling/outcoupling filter according to the present invention;
Fig. 2 is a section along line II-II from Fig. 1 according to a first embodiment of the filter;
Fig. 3 is a section along line III-III of Fig. 1 according to a first embodiment of the filter;
Fig. 4 a section along line II-II from Fig. 1 according to a second embodiment of the filter;
Fig. 5 is a section along line III-III of Fig. 1 according to a second embodiment of the filter;
Fig. 6 is a block diagram of an amplifier unit for long distance transmission of optical signals according to the invention.

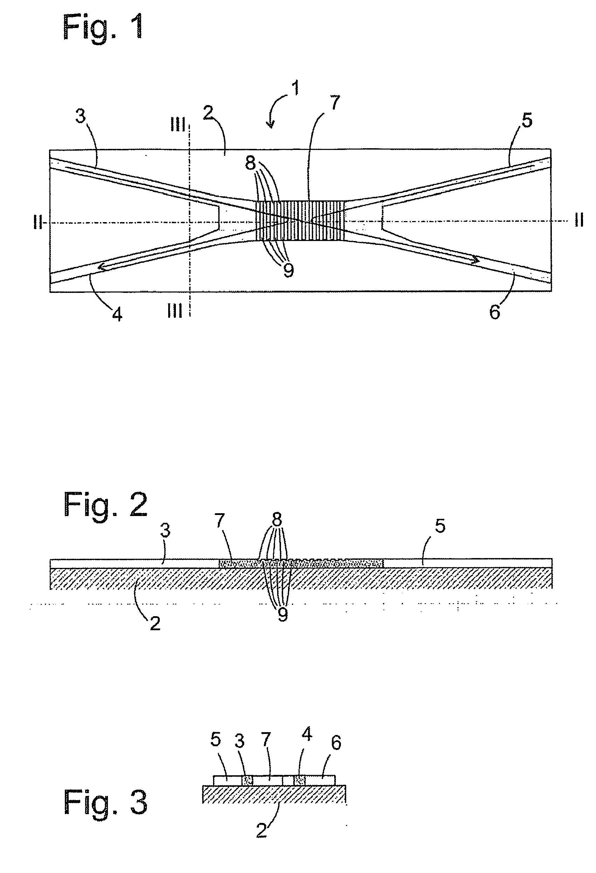

Fig. 1 is a plan view of a combined incoupling/outcoupling filter 1 according to an integrated optical embodiment of the invention. On a substrate 2 having an index of refraction n2, four single-mode waveguide sections 3, 4, 5, 6 and, in an intersection region of these waveguides, a Bragg grating zone 7 are formed. The Bragg grating zone 7 comprises a plurality of parallel strips 8, 9 having alternating light propagation characteristics such as index of refraction or thickness.

Among the spectral components of a polychromatic wave which enters the Bragg grating zone 7 e.g. by the waveguide 3, all those components that do not comply with the Bragg reflection condition are transmitted and leave the filter 1 via waveguide 6, which is a straight continuation of waveguide 3 at the other side of Bragg grating zone 7. Spectral components that comply with the Bragg condition are reflected into the waveguide 4. Since reflection occurs in a locally distributed manner at the strips 8, 9, the wave reflected into waveguide 4 may be widened in cross section; a gradually tapered zone 11 in the transition region between the Bragg grating zone and the waveguide 4 is provided for adiabatically adapting the cross section of the reflected wave to that of the waveguide 4.

The arrangement of the waveguides 5, 6 is mirror symmetric with respect to that of waveguides 3, 4; a wave introduced via waveguide 5, which complies with the Bragg condition, is reflected into waveguide 6 and is superimposed there with those spectral components of the wave introduced via waveguide 3 that do not comply with the Bragg condition.

There are different possibilities of forming the filter 1, two of which are briefly illustrated based on the sections of Figs. 2, 3, and 4, 5, respectively. Figs. 2 and 3 show the waveguides 3, 4, 5, 6 in the Bragg grating zone 7 to lie on the substrate 2. Such a structure may e.g. be obtained by depositing a thin layer having an index of refraction n1≥n2 on the substrate 2 and subsequently removing this layer by etching everywhere except at the locations of the waveguides 3 to 6 and the Bragg grating zone 7. The Bragg grating is formed by partially etching away the layer in the region of the strips 8, so that the Bragg grating is formed by the strips 8, 9 of alternating thickness.

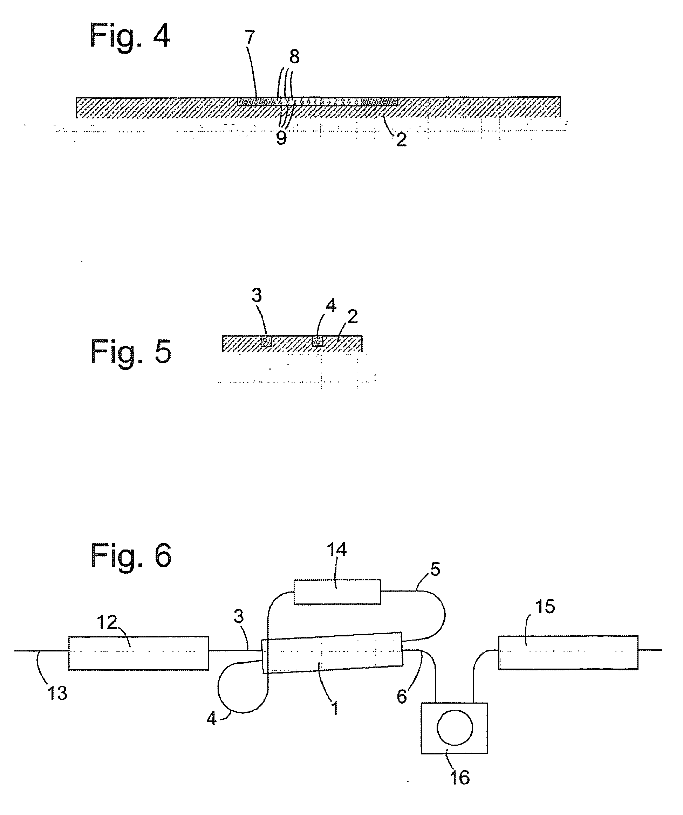

Alternatively, the filter structure may be formed by diffusing an impurity into the surface of the substrate 2, whereby in the region of the waveguide 3 to 6 and the Bragg grating zone 7, the index of refraction at the surface of the substrate 2 is increased. The sections shown in Figs. 4 and 5 result. The strips 8, 9 do not differ in thickness here, but in the concentration of the diffused impurities and, hence, in their index of refraction.

Fig. 6 is a block diagram of an amplifier unit for post-amplifying a wavelength multiplex information signal for long distance information transmission on an optical fibre. The input of the amplifier unit is directly formed by an erbium-doped fibre amplifier (EDFA) 12, which amplifies uniformly all information channels of a signal multiplex transmitted on the incoming fibre 13. The wavelength of the supervisory channel is chosen so far away from the maximum gain wavelength of the EDFA 12, that the supervisory channel does not only experience no gain when passing through the EDFA 12, but is not substantially absorbed even if due to a technical failure the EDFA 12 is not pumped and is therefore not capable of amplifying the information signals but absorbs them instead. E.g. while in an EDFA usually the wavelength region from 1530 to 1560 nm is used for the information channels, the supervisory channel is set in a wavelength region between 1600 and 1630 nm. Thus, it is ensured that it will pass through the EDFA 12 even if the information channels are absorbed completely therein.

At an output of EDFA 12, the waveguide 3 of an incoupling/outcoupling filter 1 of the type shown in Fig. 1 is connected. The width of the strips 8, 9 is selected such that the supervisory channel complies with the Bragg condition and is reflected into the fibre 4 and thus reaches a processing unit 14. This processing unit 14 may be an optical amplifier that amplifies the supervisory channel to the same extent to which the EDFA pre-amplifier 12 and an EDFA post-amplifier 15, taken together, amplify the information channels, or a series connection of an optic-electric converter, an electronic regenerator circuit and an electric-optic converter.

After passing through the processing unit 14, the supervisory channel reaches the incoupling/outcoupling filter 1 via its fibre 5, is once more Bragg-reflected therein and is thus spatially superimposed onto the information channels that go through the filter 1 without modification.

The output fibre 6 leads to a dispersion compensator for compensating deformations of the impulses of the information channels caused by dispersion in the fibre 13. Usually, this dispersion compensator 16 is not capable of also compensating correctly the supervisory channel; however, if this is the case, it is no serious problem since usually the supervisory channel has a much lower data rate than the information channels and may therefore operate with much longer impulses in which deformations caused by dispersion are not substantially noticeable.

After the dispersion compensator 16, the wavelength multiplex goes through the EDFA post-amplifier 15 before being output onto an output fibre. Compared to a conventional amplifier unit having separate incoupling and outcoupling filters for the supervisory channel, the information channels of the amplifier unit of the invention go through one optical component less. This does not only lead to a reduction of cost due to the omission of a component but also a reduction of insertion losses by those which are involved with this component and which usually amount to approx. 0.5 to 1 dB. Therefore, a lower performance of the amplifier stages 12, 15 is sufficient in order to obtain a desired total gain of the amplifier unit. While e.g. with a conventional EDFA having 15 meters of fibre length, a pump power of 200 mW is required in order to achieve a gain of 16 dB at 1550 nm, 160 mW are sufficient already for a gain of 15.5 dB. Accordingly, the required amount of pump power is reduced by 20 % by the configuration of the invention. Therefore, laser diodes having a substantially reduced performance may be used for pumping the EDFAs of the amplifier unit of the invention, whereby the cost of the amplifier unit is reduced further.

## Claims

1. A wavelength-selective optical signal processing device comprising an outcoupling filter (1) for decomposing an incoming wavelength multiplex comprising a plurality of channels at different wavelengths into a first and a second group of channels, a processing unit (14) for carrying out a processing of the first group, and an incoupling filter (1) for combining the processed first group and the second group into an outgoing wavelength multiplex, **characterized in that** the outcouplin g filter (1) and the incoupling filter (1) are coupled together through a common continuous wavelength-selective reflecting structure (7), each filter (1) having further an input and an output, said structure (7) adapted to reflect the first group from the incoming multiplex via said input of incoupling filter (1) into said output of said outcoupling filter (1) for directing said first group towards the processing unit (14) and to let the second group pass through the incoupling filter (1) and said reflecting structure (7) to the output of the outcoupling filter (1), said reflecting structure (7) is further adapted to reflect the first group arriving from a second direction after having passed through the processing unit (14) into the output of the second group, which is the output of said outcoupling filter (1).

2. The signal processing device of claim 1, **characterized in that** the wavelength-selective structure (7) is a Bragg grating.

3. The signal processing device of claim 1, **characterized in that** the wavelength-selective reflecting structure (7) is a dichroic mirror.

4. The signal processing device according to any one of the preceding claims, **characterized in that** it is provided for a wavelength multiplex having a plurality of information channels and at least one supervisory channel, OSC, that the at least one supervisory channel forms the first group and that the information channels form the second group.

5. The signal processing device according to any one of the preceding claims, **characterized in that** it comprises at least one optical amplifier stage (12, 15) passed through by the entire wavelength multiplex.

6. The signal processing device of claim 5, **characterized in that** the optical amplifier stage (12, 15) is transparent for the first group also in its unpumped state.

7. The signal processing device according to one of the preceding claims, **characterized in that** it is a regenerating amplifier for an optical long distance cable.

8. An incoupling/outcoupling filter (1) in a wavelength-selective optical signal processing device according to claims 1 - 7 further comprising four waveguides (3, 4, 5, 6) symmetrically arranged in two pairs (3, 4 and 5, 6) on two opposite sides of a common Bragg grating zone (7), wherein said Bragg grating zone (7) is arranged to reflect spectral components from a first waveguide of the first pair on one side of the common Bragg grating zone (7) that comply with the Bragg condition into another waveguide of the first pair on the same side of the Bragg grating zone (7) as the first waveguide through which the spectral components entered the Bragg grating zone (7) and transmit through the Bragg grating zone (7) the spectral components that do not comply with the Bragg condition into one waveguide (6) of the second pair (5, 6) on the other side of the Bragg grating zone (7).

## Patentansprüche

1. Wellenlängenselektive optische Signalverarbeitungseinrichtung, welche umfasst: ein Auskoppelfilter (1) zum Zerlegen eines ankommenden Wellenlängenmultiplex, das mehrere Kanäle mit unterschiedlichen Wellenlängen umfasst, in eine erste und eine zweite Gruppe von Kanälen, eine Verarbeitungseinheit (14) zum Ausführen einer Verarbeitung der ersten Gruppe und ein Einkoppelfilter (1) zum Kombinieren der verarbeiteten ersten Gruppe und der zweiten Gruppe zu einem abgehenden Wellenlängenmultiplex, **dadurch gekennzeichnet, dass** das Auskoppelfilter (1) und das Einkoppelfilter (1) miteinander durch eine gemeinsame durchgehende wellenlängenselektive reflektierende Struktur (7) verbunden sind, wobei jedes Filter (1) ferner einen Eingang und einen Ausgang aufweist, wobei die Struktur (7) so beschaffen ist, dass sie die erste Gruppe aus dem ankommenden Multiplex über den Eingang des Einkoppelfilters (1) in den Ausgang des Auskoppelfilters (1) reflektiert, um die erste Gruppe zu der Verarbeitungseinheit (14) zu lenken, und dass sie die zweite Gruppe durch das Einkoppelfilter (1) und die reflektierende Struktur (7) zu dem Ausgang des Auskoppelfilters (1) durchlässt, wobei die reflektierende Struktur (7) ferner so beschaffen ist, dass sie die erste Gruppe, die aus einer zweiten Richtung ankommt, nachdem sie die Verarbeitungseinheit (14) durchlaufen hat, in den Ausgang der zweiten Gruppe reflektiert, welcher der Ausgang des Auskoppelfilters (1) ist.

2. Signalverarbeitungseinrichtung nach Anspruch 1, **dadurch gekennzeichnet, dass** die wellenlängenselektive Struktur (7) ein Bragg-Gitter ist.

3. Signalverarbeitungseinrichtung nach Anspruch 1, **dadurch gekennzeichnet, dass** die wellenlängenselektive Struktur (7) ein dichroischer Spiegel ist.

4. Signalverarbeitungseinrichtung nach einem der vorhergehenden Ansprüche, **dadurch gekennzeichnet, dass** sie für ein Wellenlängenmultiplex vorgesehen ist, das mehrere Informationskanäle und mindestens einen Überwachungskanal, OSC, aufweist, dass der mindestens eine Überwachungskanal die erste Gruppe bildet und dass die Informationskanäle die zweite Gruppe bilden.

5. Signalverarbeitungseinrichtung nach einem der vorhergehenden Ansprüche, **dadurch gekennzeichnet, dass** sie mindestens eine optische Verstärkerstufe (12, 15) umfasst, die von dem gesamten Wellenlängenmultiplex durchlaufen wird.

6. Signalverarbeitungseinrichtung nach Anspruch 5, **dadurch gekennzeichnet, dass** die optische Verstärkerstufe (12, 15) auch in ihrem ungepumpten Zustand für die erste Gruppe durchlässig ist.

7. Signalverarbeitungseinrichtung nach einem der vorhergehenden Ansprüche, **dadurch gekennzeichnet, dass** sie ein Regenerierverstärker für ein optisches Langstreckenkabel ist.

8. Einkoppel-/Auskoppelfilter (1) in einer wellenlängenselektiven optischen Signalverarbeitungseinrichtung nach den Ansprüchen 1-7, welches ferner vier Wellenleiter (3, 4, 5, 6) umfasst, die symmetrisch in zwei Paaren (3, 4 und 5, 6) auf zwei gegenüberliegenden Seiten eines gemeinsamen Bragg-Gitter-Bereiches angeordnet sind, wobei der Bragg-Gitter-Bereich (7) so gestaltet ist, dass er Spektralkomponenten von einem ersten Wellenleiter des ersten Paares auf einer Seite des gemeinsamen Bragg-Gitter-Bereiches (7), welche die Bragg-Bedingung erfüllen, in einen anderen Wellenleiter des ersten Paares auf derselben Seite des Bragg-Gitter-Bereiches (7) wie der erste Wellenleiter, durch welchen die Spektralkomponenten in den Bragg-Gitter-Bereich (7) eingetreten sind, reflektiert, und dass er die Spektralkomponenten, welche nicht die Bragg-Bedingung erfüllen, durch den Bragg-Gitter-Bereich (7) in einen Wellenleiter (6) des zweiten Paares (5, 6) auf der anderen Seite des Bragg-Gitter-Bereiches (7) durchlässt.

## Revendications

1. Dispositif de traitement de signaux optiques à sélection de longueurs d'ondes comprenant un filtre de découplage (1) pour décomposer un multiplexage entrant de longueurs d'ondes comprenant une pluralité de canaux à des longueurs d'ondes différentes en un premier et un second groupe de canaux, une unité de traitement (14) pour exécuter un traitement du premier groupe et un filtre de couplage (1) pour combiner le premier groupe traité et le second groupe en un multiplexage sortant de longueurs d'ondes, **caractérisé en ce que** le filtre de découplage (1) et le filtre de couplage (1) sont couplés conjointement par l'intermédiaire d'une structure (7) réfléchissante à sélection de longueurs d'ondes continue commune, chaque filtre comportant en outre une entrée et une sortie, ladite structure (7) étant adaptée afin de réfléchir le premier groupe provenant du multiplexage entrant via ladite entrée de filtre de couplage (1) dans ladite sortie dudit filtre de découplage (1) pour diriger ledit premier groupe dans la direction de l'unité de traitement (14) et de faire passer le second groupe à travers le filtre de couplage (1) et ladite structure réfléchissante (7) vers la sortie du filtre de découplage (1), ladite structure réfléchissante (7) étant en outre adaptée afin de réfléchir le premier groupe arrivant depuis une seconde direction après être passé par l'unité de traitement (14) dans la sortie du second groupe, qui est la sortie dudit filtre de découplage (1).

2. Dispositif de traitement de signaux selon la revendication 1, **caractérisé en ce que** la structure à sélection de longueurs d'ondes (7) est un réseau de Bragg.

3. Dispositif de traitement de signaux selon la revendication 1, **caractérisé en ce que** la structure réfléchissante à sélection de longueurs d'ondes (7) est un miroir dichroïque.

4. Dispositif de traitement de signaux selon une quelconque des revendications précédentes, **caractérisé en ce que** il est prévu pour un multiplexage de longueurs d'ondes comportant une pluralité de canaux d'information et au moins un canal de supervision, OSC, **en ce que** au moins le canal de supervision forme le premier groupe et **en ce que** les canaux d'information forment le second groupe.

5. Dispositif de traitement de signaux selon une quelconque des revendications précédentes, **caractérisé en ce que** il comprend au moins un étage d'amplificateur optique (12,15) à travers lequel passe la totalité du multiplexage de longueurs d'ondes.

6. Dispositif de traitement de signaux selon la revendication 5, **caractérisé en ce que** l'étage d'amplificateur optique (12,15) est transparent pour le premier groupe également dans son état non pompé.

7. Dispositif de traitement de signaux selon une quelconque des revendications précédentes, **caractérisé en ce que** il s'agit d'un amplificateur régénératif destiné à un câble optique longue distance.

8. Filtre de couplage/découplage (1) dans un dispositif de traitement de signaux optiques à sélection de longueurs d'ondes selon les revendications 1 à 7, comprenant en outre quatre guides d'ondes (3,4,5,6) agencés symétriquement en deux paires (3,4 et 5,6) sur deux côtés opposés d'une zone de réseau de Bragg commune (7), moyennant quoi ladite zone de réseau de Bragg (7) est agencée de manière à réfléchir des composants spectraux à partir d'un premier guide d'ondes de la première paire sur un côté de la zone de réseau de Bragg commune (7) qui se conforme à la condition de Bragg dans un autre guide d'ondes de la première paire du même côté de la zone de réseau de Bragg (7) que le premier guide d'ondes à travers lequel les composants spectraux sont entrés dans la zone de réseau de Bragg (7) et à transmettre à travers la zone de réseau de Bragg (7) les composants spectraux qui ne se conforment pas à la condition de Bragg dans un guide d'ondes (6) de la seconde paire (5,6) de l'autre côté de la zone de réseau de Bragg (7).
